(19) Europäisches Patentamt
European Patent Office
Office européen des brevets

(11) EP 4 609 943 A1

(12) EUROPEAN PATENT APPLICATION
published in accordance with Art. 153(4) EPC

(43) Date of publication:
**03.09.2025 Bulletin 2025/36**

(21) Application number: **23882662.2**

(22) Date of filing: **25.10.2023**

(51) International Patent Classification (IPC):
***B01D 71/52*** (2006.01) ***B01D 53/22*** (2006.01)
***B01D 67/00*** (2006.01) ***B01D 69/02*** (2006.01)
***B01D 69/10*** (2006.01) ***B01D 69/12*** (2006.01)
***G01N 30/72*** (2006.01) ***G01N 30/88*** (2006.01)

(52) Cooperative Patent Classification (CPC):
**B01D 53/22; B01D 67/00; B01D 69/02; B01D 69/10; B01D 69/12; B01D 71/52; G01N 30/72; G01N 30/88**

(86) International application number:
**PCT/JP2023/038436**

(87) International publication number:
**WO 2024/090457 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2022 JP 2022171342**

(71) Applicant: **Sumitomo Chemical Company, Limited**
**Tokyo 103-6020 (JP)**

(72) Inventors:
- **YOKOFUJITA, Toshiyuki**
  **Osaka-shi, Osaka 554-8558 (JP)**
- **KAWARA, Kensuke**
  **Osaka-shi, Osaka 554-8558 (JP)**
- **IITSUKA, Kohei**
  **Osaka-shi, Osaka 554-8558 (JP)**
- **ADACHI, Tatsuhiko**
  **Osaka-shi, Osaka 554-8558 (JP)**
- **KATAKURA, Shiro**
  **Osaka-shi, Osaka 554-8558 (JP)**

(74) Representative: **Winter, Brandl - Partnerschaft mbB**
**Alois-Steinecker-Straße 22**
**85354 Freising (DE)**

# (54) GAS SEPARATION MEMBRANE, GAS SEPARATION DEVICE, METHOD FOR PRODUCING GAS SEPARATION MEMBRANE, AND ANALYSIS METHOD

(57) As a gas separation membrane that suppresses leaks and has excellent $CO_2$ permeability under a low temperature condition, provided is a gas separation membrane (10) including a separation functional layer (15) which contains a polymer having a polyethylene oxide structure and satisfies a condition [x] and/or a condition [y].

<Condition [x]>

When, in a chromatogram obtained by measuring a solution which is obtained by chemically decomposing the separation functional layer with use of acetic anhydride and p-toluenesulfonic acid monohydrate by a gas chromatography mass spectrometry method, a peak area of a compound of formula (a) is denoted as Pa, and a peak area of a compound of formula (b) is denoted as Pb,

EP 4 609 943 A1

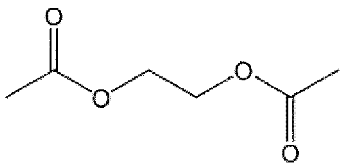

(a)

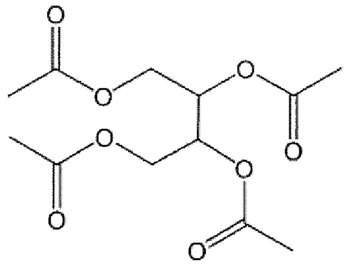

(b)

the separation functional layer satisfies a relationship of expression (I):

$$(Pb/Pa) \times 100 \geq 0.03 \quad (I).$$

<Condition [y]>

The polymer contains crosslinked polyethylene oxide, and the separation functional layer has a melting point of 60°C or lower.

FIG. 1

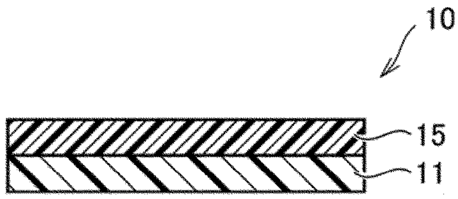

## Description

### Technical Field

The present invention relates to a gas separation membrane, a gas separation device, and a method for producing a gas separation membrane and further relates to an analysis method for analyzing a crosslinked structure of a polymer having a polyethylene oxide structure.

### Background Art

It is known that a polymer separation membrane is used as a gas separation membrane that separates a specific gas component from a mixed gas (for example, Patent Literatures 1 and 2 and others). Patent Literature 1 discloses, as a so-called facilitated transport membrane, a polymer separation membrane that contains a hydrophilic polymer and a gas carrier which reversibly and selectively reacts with a specific gas component. In the facilitated transport membrane, a specific gas component contained in a mixed gas reacts with the gas carrier to form a reaction product, and this reaction product moves in the facilitated transport membrane. In this way, the facilitated transport membrane can selectively allow the specific gas component to permeate therethrough.

### Citation List

[Patent Literature]

[Patent Literature 1]
Japanese Patent Application Publication Tokukaihei No. 7-275672
[Patent Literature 2]
Japanese Patent No. 3668771

### Summary of Invention

### Technical Problem

The facilitated transport membrane has excellent gas selectivity. However, the facilitated transport membrane contains the gas carrier, and therefore there is concern about a degraded gas separation ability caused by leakage of the gas carrier out of the membrane when the gas separation membrane is used.

As a gas separation membrane that does not use a gas carrier, a so-called dissolution-diffusion membrane is known. The dissolution-diffusion membrane can selectively allow a specific gas component to permeate therethrough by utilizing a difference in solubility of gas components contained in a mixed gas with respect to a membrane material and a difference in diffusion coefficient of the gas components contained in the mixed gas in the membrane material.

Patent Literature 1 discloses using polyethylene oxide in the facilitated transport membrane, but does not disclose using polyethylene oxide as the dissolution-diffusion membrane. The dissolution-diffusion membrane using polyethylene oxide has low gas tightness and thus can cause leaks (leakage) and/or a failure to obtain sufficient permeability to a specific gas component.

An object of the present invention is to provide a gas separation membrane that suppresses leaks and that has excellent carbon dioxide permeability under a low-temperature condition. Here, in the present specification, "suppression of leaks" refers to a case where, when a gas separation membrane is subjected to the method described in the [Leak test] in Examples described later, a flow rate of not less than 1.5 mL/min is not observed at the exit of a permeation side chamber of a separation membrane cell.

### Solution to Problem

The present invention provides a gas separation membrane, a gas separation device, a method for producing a gas separation membrane, and an analysis method for analyzing a crosslinked structure of a polymer having a polyethylene oxide structure, all of which are presented below.

<1> A gas separation membrane including a separation functional layer,

the separation functional layer containing a polymer which has a polyethylene oxide structure and which satisfies at least one selected from the group consisting of a condition [x] and a condition [y],
the condition [x] being such that:

assuming that, in a chromatogram obtained by measuring a solution which is obtained by chemically decomposing the separation functional layer with use of acetic anhydride and p-toluenesulfonic acid monohydrate by a gas chromatography mass spectrometry method, a peak area of a compound represented by the following formula (a) is denoted as Pa, and a peak area of a compound represented by the following formula (b) is denoted as Pb,

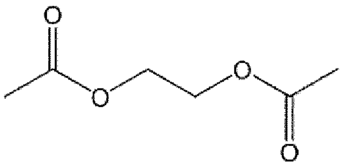

(a)

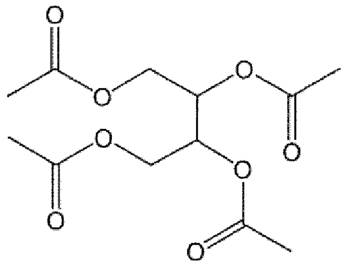

(b)

the separation functional layer satisfies a relationship represented by the following expression (I):

$$(Pb/Pa) \times 100 \geq 0.03 \quad (I),$$

the condition [y] being such that:

the polymer contains crosslinked polyethylene oxide; and
the separation functional layer has a melting point of not higher than 60°C.

<2> The gas separation membrane described in <1>, wherein a degree of crystallinity of the separation functional layer at a temperature of 25°C is not more than 70%.
<3> The gas separation membrane described in <1> or <2>, wherein the separation functional layer satisfies the condition [x].
<4> The gas separation membrane described in any of <1> to <3>, further including a porous support layer, wherein the porous support layer and the separation functional layer are formed on top of each other.
<5> The gas separation membrane described in any of <1> to <4>, wherein a water content of the separation functional layer at a temperature of 20°C and at a relative humidity of 50% RH is not more than 15% by mass.
<6> The gas separation membrane described in any of <1> to <5>, wherein the gas separation membrane selectively allows carbon dioxide to permeate therethrough from a mixed gas including the carbon dioxide and nitrogen.
<7> A gas separation device, including a gas separation membrane described in any of <1> to <6>.
<8> A method for producing a gas separation membrane described in any of <1> to <6>,

the gas separation membrane including a separation functional layer and a porous support layer,
the method including:

a step (S1) of preparing a composition that contains polyethylene oxide and a liquid medium for dissolving or dispersing the polyethylene oxide;
a step (S2) of applying, onto the porous support layer, the composition that has been filtered; and
a step (S3) of irradiating, with an electron beam, the composition that has been applied onto the porous support layer.

<9> The method described in <8>, wherein the polyethylene oxide has a weight-average molecular weight of not less than $10\times10^3$.
<10> The method described in <8> or <9>, wherein, in the step (S3), the composition is irradiated with the electron beam at an exposure dose of not less than 10 kGy.
<11> The method described in any of <8> to <10>, further including, after the step (S3), a step (S4) of removing the

liquid medium from the composition that has been irradiated with the electron beam.

<12> An analysis method for analyzing a crosslinked structure of a polymer having a polyethylene oxide structure, the analysis method including:

a step of measuring, by a gas chromatography mass spectrometry method, a solution obtained by chemically decomposing the polymer with use of acetic anhydride and p-toluenesulfonic acid monohydrate; and

a step of detecting a peak of a compound represented by the following formula (a) and a peak of a compound represented by the following formula (b) in a chromatogram obtained by the gas chromatography mass spectrometry method.

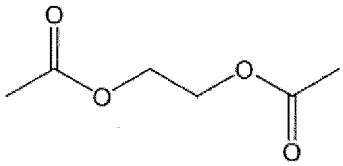

(a)

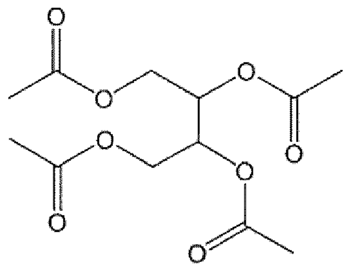

(b)

<13> The analysis method described in <12>, further including a step of analyzing the crosslinked structure of the polymer on a basis of a ratio between a peak area Pa of the compound represented by the formula (a) and a peak area Pb of the compound represented by the formula (b) in the chromatogram obtained in the measurement step.

<14> The analysis method described in <12> or <13>, wherein the polymer chemically decomposed in the measurement step is a polymer contained in a separation functional layer of a gas separation membrane.

Advantageous Effects of Invention

A gas separation membrane in accordance with an embodiment of the present invention suppresses leaks and has excellent carbon dioxide permeability under a low-temperature condition.

Brief Description of Drawings

Fig. 1 is a cross-sectional view schematically illustrating a gas separation membrane in accordance with an embodiment of the present invention.

Fig. 2 is a cross-sectional view schematically illustrating a gas separation membrane in accordance with another embodiment of the present invention.

Fig. 3 is a schematic diagram illustrating a gas separation device used in Examples.

Description of Embodiments

The following description will discuss embodiments of the present invention with reference to the drawings. Note, however, that the present invention is not limited to the embodiments below.

(Gas separation membrane)

Figs. 1 and 2 are each a cross-sectional view schematically illustrating a gas separation membrane in accordance with an embodiment of the present invention.

A gas separation membrane 10 includes a separation functional layer 15. The separation functional layer 15 contains a polymer which has a polyethylene oxide structure (hereinafter also referred to as "polymer (p)") and satisfies at least one selected from the group consisting of a condition [x] and a condition [y] which will be described later.

The gas separation membrane 10 can be a dissolution-diffusion membrane. The gas separation membrane 10 contains the polymer (p) and therefore has high affinity to carbon dioxide ($CO_2$). Accordingly, the gas separation membrane 10 can selectively allow $CO_2$ to permeate therethrough from a mixed gas (raw material gas) including $CO_2$ and nitrogen ($N_2$). As will be described later, the gas separation membrane 10 can suppress leaks and have excellent

$CO_2$ permeability under a low temperature condition because the separation functional layer 15 satisfies at least one selected from the group consisting of the condition [x] and the condition [y]. The gas separation membrane 10 can be suitably used in gas separation that is carried out under a temperature condition of not lower than 20°C and not higher than 60°C. For example, the gas separation membrane 10 can be used in gas separation of a combustion exhaust gas that is generated in an incinerator.

As illustrated in Figs. 1 and 2, the gas separation membrane 10 may include a porous support layer 11, and the porous support layer 11 and the separation functional layer 15 may be formed on top of each other. The porous support layer 11 may be in direct contact with the separation functional layer 15. Alternatively, a gutter layer may be provided between the porous support layer 11 and the separation functional layer 15. If the gas separation membrane 10 has a gutter layer, the porous support layer 11 and the separation functional layer 15 are preferably in direct contact with the gutter layer.

As illustrated in Fig. 2, the gas separation membrane 10 may have a protective layer 12 on the opposite side of the separation functional layer 15 from the porous support layer 11.

As illustrated in Fig. 2, the gas separation membrane 10 may further have a reinforcing layer 13 on the opposite side of the porous support layer 11 from the separation functional layer 15. The reinforcing layer 13 may be provided in direct contact with the porous support layer 11. For example, the reinforcing layer 13 and the porous support layer 11 may be thermally fused to each other. Alternatively, the reinforcing layer 13 and the porous support layer 11 may be bonded together by an adhesive or bonding agent.

The following will describe the layers included in the gas separation membrane 10 in detail.

(Separation functional layer)

The separation functional layer 15 contains the polymer (p) and satisfies at least one selected from the group consisting of the condition [x] and the condition [y] below.

<Condition [x]>

Assuming that, in a chromatogram obtained by measuring a solution which is obtained by chemically decomposing the separation functional layer 15 with use of acetic anhydride and p-toluenesulfonic acid monohydrate by a gas chromatography mass spectrometry method, a peak area of a compound represented by the following formula (a) (hereinafter also referred to as "compound (a)") is denoted as Pa, and a peak area of a compound represented by the following formula (b) (hereinafter also referred to as "compound (b)") is denoted as Pb,

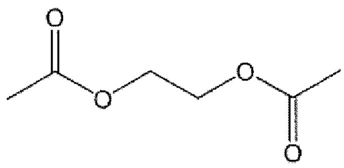

(a)

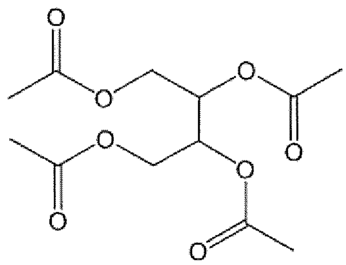

(b)

the separation functional layer 15 satisfies a relationship represented by the following expression (I):

$$(Pb/Pa) \times 100 \geq 0.03 \quad (I).$$

<Condition [y]>

The polymer (p) contains crosslinked polyethylene oxide (hereinafter also referred to as "crosslinked PEO"), and

The separation functional layer 15 has a melting point of not higher than 60°C.

The polymer (p) is a polymer which includes a repeating structure that is of an ethyleneoxy unit expressed as -($C_2H_4O$)- (-$(C_2H_4O)_n$- where n is an integer of 2 or more). Examples of a polymer included in the polymer (p) include polyethylene oxide having, in its main chain, a repeating structure -$(C_2H_4O)_n$- (hereinafter also referred to as "PEO"), and crosslinked PEO, which is a crosslinked product of PEO, and the like.

In the repeating structure -$(C_2H_4O)_n$- of PEO, n is usually 100 or more and 1 million or less, may be 400 or more

and 0.2 million or less, and may be 10,000 or more and 0.1 million or less. The PEO is preferably a homopolymer of ethylene oxide. The crosslinked PEO may be a polymer having a structure in which the PEO is crosslinked in a molecule, or may be a polymer having a structure in which the PEO is crosslinked between molecules. The crosslinked PEO may be a chemically-crosslinked product which has a structure crosslinked by a covalent bond, or may be a physically-crosslinked product which has a structure crosslinked by a coordinate bond and/or a hydrogen bond. The chemically-crosslinked product and the physically-crosslinked product are formed, for example, by carrying out electron beam irradiation with respect to the PEO described later or by carrying out a crosslinking treatment using a crosslinking agent with respect to the PEO. The crosslinking structure of the crosslinked PEO may be a structure in which the PEO is crosslinked by a crosslinking agent in a molecule or between molecules. The crosslinking structure is preferably a structure in which a carbon atom contained in the PEO is linked by a single bond in a molecule or between molecules. If the separation functional layer 15 satisfies at least one selected from the group consisting of the condition [x] and the condition [y], the polymer (p) contains at least the crosslinked PEO.

The separation functional layer 15 only needs to satisfy at least one selected from the group consisting of the above-described condition [x] and the above-described condition [y], preferably satisfies the condition [x], and more preferably satisfies both the condition [x] and the condition [y].

In the condition [x], it is considered that, by chemically decomposing the separation functional layer 15 with use of acetic anhydride and p-toluenesulfonic acid monohydrate, the polymer (p) contained in the separation functional layer 15 is chemically decomposed, and the compound (a) and the compound (b) are obtained as decomposition products of the polymer (p). In the chromatogram obtained by measuring the solution which is obtained by chemically decomposing the separation functional layer 15 by a gas chromatography mass spectrometry method, the peaks originated from the compound (a) and the compound (b) appear. It is possible to determine, on the basis of the peak area Pa and the peak area Pb of these peaks, a content proportion between the compound (a) and the compound (b) in the solution obtained by chemically decomposing the separation functional layer 15. The compound (a) does not have a crosslinked structure, and the compound (b) has a structure in which two compounds (a) are crosslinked. Therefore, the left side ((Pb/Pa) $\times$ 100) of the expression (I) can be said to represent a proportion (crosslinking density) of the crosslinked structure included in the polymer (p).

The left side ((Pb/Pa) $\times$ 100) of the expression (I) is 0.03 or more and may be 0.05 or more, may be 0.06 or more, may be 0.08 or more, or may be 0.1 or more. The left side of the expression (I) is usually 4 or less, preferably 3 or less, and more preferably 2 or less, and may be 1 or less. Excessive crosslinking of the polymer (p) can decrease $CO_2$ permeability of an obtained separation functional layer and a gas separation membrane that includes the separation functional layer. It is inferred that the cause of the decrease in $CO_2$ permeability is a decrease in mobility of the polymer (p) resulting from excessive restraint of the polymer (p) which is caused by excessive crosslinking of the polymer (p). In the compound (b), a stereoisomer is present. Therefore, in the present specification, it is assumed that the compound (b) includes all stereoisomers that may occur. If the compound (b) includes a stereoisomer, and two or more peaks of the compound (b) are observed in a chromatograph, the peak area Pb is assumed to be a value of a total peak area of all peaks originated from the compound (b). A method for obtaining a solution by chemically decomposing the separation functional layer 15 with use of acetic anhydride and p-toluenesulfonic acid monohydrate and measurement of the solution by a gas chromatography mass spectrometry method can be carried out by the methods described in Examples which will be described later.

If the separation functional layer 15 contains the polymer (p) and satisfies the condition [x] (i.e., the relationship represented by the expression (I)), it is possible to obtain a gas separation membrane that suppresses leaks and has excellent $CO_2$ permeability under a low temperature condition. The reason for this is presumed to be as follows.

An amorphous portion of the polymer (p) has excellent $CO_2$ permeability, while a crystalline portion of the polymer (p) tends to have poor $CO_2$ permeability. Since PEO has high crystallinity, a gas separation membrane using a separation functional layer which is formed of PEO has poor $CO_2$ permeability. In addition, the separation functional layer which is formed of PEO is more likely to have a defect and tends to leak during gas separation. In contrast, it is considered that the separation functional layer 15 that satisfies the relationship represented by the expression (I) is relatively rich in crosslinked PEO, and the polymer (p) has a high proportion of amorphous portion. The separation functional layer 15 which is formed of the polymer (p) containing the amorphous portion is less likely to have a defect and is less likely to leak during gas separation. Therefore, the gas separation membrane 10 that includes the separation functional layer 15 which satisfies the relationship represented by the expression (I) can suppress leaks and have excellent $CO_2$ permeability.

It is generally known that a polymer into which the crosslinked structure is introduced tends to have an increased melting point in comparison with a non-crosslinked polymer. This is considered to be because crosslinking of the polymer decreases the fusion entropy and increases the molecular weight and thus increases the fusion enthalpy. However, in the separation functional layer 15 in accordance with the present embodiment, as the crosslinked structure in the polymer (p) increases, the melting point of the separation functional layer 15 tends to decrease. Although the reason for this is unclear, it is considered that, due to the crosslinking, PEO is prone to molecular disorder and has a decreased fusion entropy, has a crystal layer with a decreased thickness, and thus decreases the melting point. Thus, the gas separation membrane 10

that includes the separation functional layer 15 which contains the polymer (p) and which satisfies the condition [x] can be suitably used in gas separation under a low temperature condition.

The left side ((Pb/Pa) $\times$ 100) in the expression (I) can be adjusted by: a weight-average molecular weight of PEO contained in a composition for forming the separation functional layer 15 in the method for producing the gas separation membrane 10 which will be described later; a contained amount (concentration) of the PEO and/or the crosslinking agent in the composition; an exposure dose of an electron beam with which the composition applied onto the porous support layer 11 is irradiated; or, for example, a combination of two or more of these.

In the condition [y], the melting point of the separation functional layer 15 is not higher than 60°C, may be not higher than 59°C, may be not higher than 57°C, may be not higher than 55°C, and is usually not lower than 20°C. The melting point of the separation functional layer 15 can be measured by the method described in Examples which will be described later.

If the separation functional layer 15 contains the polymer (p) and satisfies the condition [y], it is possible to obtain a gas separation membrane that suppresses leaks and has excellent $CO_2$ permeability under a low temperature condition. Since the separation functional layer 15 which satisfies the condition [y] contains the crosslinked PEO, the polymer (p) contained in the separation functional layer 15 can have an amorphous portion. Therefore, for the above reason, the gas separation membrane 10 can suppress leaks and have excellent $CO_2$ permeability. Since the melting point of the separation functional layer 15 is not higher than 60°C, the gas separation membrane 10 can be suitably used in gas separation under a low temperature condition.

The melting point of the separation functional layer 15 can be adjusted by any of the following elements or by, for example, a combination of two or more of these elements. Here, the elements are as follows:

· The content proportion of the crosslinked PEO in the polymer (p);
· The weight-average molecular weight of the PEO contained in the composition for forming the separation functional layer 15 in the method for producing the gas separation membrane 10 which will be described later;
· The contained amount (concentration) of the PEO and/or the crosslinking agent in the composition; and
· The exposure dose of the electron beam with which the composition applied onto the porous support layer 11 is irradiated.

A degree of crystallinity of the separation functional layer 15 at a temperature of 25°C is preferably not more than 70%, more preferably not more than 68%, and further preferably not more than 65%, may be not more than 60%, may be not more than 55%, and is usually not less than 1%. If the degree of crystallinity of the separation functional layer 15 falls within the above-described range, it is possible to obtain the gas separation membrane 10 having more excellent $CO_2$ permeability under a low temperature condition. The degree of crystallinity of the separation functional layer 15 can be measured by the method described in Examples which will be described later.

The degree of crystallinity of the separation functional layer 15 can be adjusted by any of the following elements or by, for example, a combination of two or more of these elements. Here, the elements are as follows:

· The content proportion of the crosslinked PEO in the polymer (p);
· The weight-average molecular weight of the PEO contained in the composition for forming the separation functional layer 15 in the method for producing the gas separation membrane 10 which will be described later;
· The exposure dose of the electron beam with which the composition applied onto the porous support layer 11 is irradiated; and
· A drying condition (drying temperature and/or drying time) of the composition applied onto the porous support layer 11.

A water content of the separation functional layer 15 at a temperature of 20°C and at a relative humidity of 50% RH is not more than 15% by mass, may be not more than 12% by mass, and is not more than 8% by mass. The separation functional layer 15 having a water content in the above range is in a film form.

A contained amount of the polymer (p) with respect to a total amount of the separation functional layer 15 is preferably not less than 50% by mass, more preferably not less than 80% by mass, and further preferably not less than 90% by mass, and may be not less than 95% by mass.

The separation functional layer 15 may contain, in addition to the polymer (p), for example, an additive such as a surfactant, a filler, and an antioxidant, a crosslinking agent, and a liquid medium (described later) which are contained in a composition for forming the separation functional layer 15. If the gas separation membrane 10 in accordance with the present embodiment is used as a dissolution-diffusion membrane, the separation functional layer 15 preferably does not contain a gas carrier. Examples of the gas carrier include substances that react reversibly with carbon dioxide. Specific examples of such substances include alkali metal carbonate, alkali metal bicarbonate, alkanolamine, alkali metal hydroxide, and the like. The state of not containing a gas carrier means that a contained amount of a gas carrier is less

than 0.1% by mass with respect to a total mass of the separation functional layer 15.

A thickness of the separation functional layer 15 is preferably not less than 0.01 μm and not more than 100 μm, and more preferably not less than 0.05 μm and not more than 50 μm, may be not less than 0.1 μm and not more than 20 μm, may be not less than 0.1 pm and not more than 10 μm, and may be not less than 0.2 μm and not more than 2 μm.

(Porous support layer)

The porous support layer 11 can support the separation functional layer 15. The porous support layer 11 preferably has porosity with high gas permeability so as not to serve as resistance against diffusion of a mixed gas fed to the separation functional layer 15 and a gas (e.g., $CO_2$) that is contained in the mixed gas and selectively permeates through the separation functional layer 15. The porous support layer 11 can be formed by a resin material or an inorganic material. The porous support layer 11 may have a single-layer structure or may have a multilayer structure.

Examples of a resin material constituting the porous support layer 11 include: polyolefin-based resins such as polyethylene (PE) and polypropylene (PP); fluorine-containing resins such as polytetrafluoroethylene (PTFE), polyvinyl fluoride (PVF), and polyvinylidene fluoride (PVDF); polyester resins such as polyethylene terephthalate (PET) and polyethylene naphthalate; polystyrene (PS); polyether sulfone (PES); polyphenylene sulfide (PPS); polysulfone (PSF); polyacrylonitrile (PAN); polyphenylene oxide (PPO); polyamide (PA); polyimide (PI); polyetherimide (PEI); polyether ether ketone (PEEK); high molecular weight polyester; heat resistant polyamide; aramid; polycarbonate; a mixture of at least two of these resin materials; and the like. Among these, the resin material preferably contains a polyolefin-based resin, and more preferably contains at least one selected from the group consisting of polyethylene and polypropylene. Examples of an inorganic material constituting the porous support layer 11 include metals, glass, ceramics, and the like.

The porous support layer 11 is not particularly limited as long as the porous support layer 11 is a porous body. The porous support layer 11 may be a porous body in the form of sheet such as a porous resin film, a nonwoven fabric, a woven fabric, foam, a mesh, and a net. The porous support layer 11 is preferably a porous resin film.

(Gutter layer)

The gas separation membrane 10 can have a gutter layer between the porous support layer 11 and the separation functional layer 15. The gutter layer makes it possible to, when a composition for forming a separation functional layer 15 is applied onto the porous support layer 11, reduce excessive permeation of the composition into the porous support layer 11, as compared with a case where the gas separation membrane 10 does not have the gutter layer. As a result, it is possible to allow the separation functional layer 15 to be properly formed on the porous support layer 11. The gutter layer can also reduce leakage of a mixed gas (raw material gas) from a defect that has occurred in the separation functional layer 15, as compared with a case where the gas separation membrane 10 does not have the gutter layer.

A gas permeation rate of the gutter layer is preferably greater than a gas permeation rate of the separation functional layer 15. The material for forming the gutter layer is not particularly limited. The gutter layer can be formed using a resin which has gas permeability. Examples of such a resin include a silicone resin, an amorphous fluorocarbon resin, and the like. The gutter layer may have a single-layer structure or may have a multilayer structure.

(Protective layer)

In order to protect the separation functional layer 15, the gas separation membrane 10 can have a protective layer 12 on the opposite side of the separation functional layer 15 from the porous support layer 11. The protective layer 12 can be formed by a resin material or an inorganic material, and can be formed by, for example, a material described as a material that can be used in the porous support layer 11. The protective layer 12 may have a single-layer structure or may have a multilayer structure.

(Reinforcing layer)

The gas separation membrane 10 can have a reinforcing layer 13 on the opposite side of the porous support layer 11 from the separation functional layer 15. The reinforcing layer 13 can be provided in order to improve handleability during production of the gas separation membrane 10 and to impart moderate strength to the gas separation membrane 10. The reinforcing layer 13 can have a thickness that is greater than that of the porous support layer 11. The reinforcing layer 13 can have porosity with high gas permeability so as not to serve as resistance against diffusion of a mixed gas fed to the separation functional layer 15 and a gas (e.g., $CO_2$) that is contained in the mixed gas and selectively permeates through the separation functional layer 15. The reinforcing layer 13 can be formed by a resin material or an inorganic material, and it is possible to use a material in the form of a nonwoven fabric, woven fabric, or net. The reinforcing layer 13 can be formed by, for example, a material described as a material that can be used in the porous support layer 11.

(Method for producing gas separation membrane)

A method for producing a gas separation membrane in accordance with the present embodiment is a method for producing the above-described gas separation membrane 10, and is, in particular, a method for producing a gas separation membrane 10 that has a separation functional layer 15 and a porous support layer 11.

The method for producing the gas separation membrane 10 includes:

a step (S1) of preparing a composition that contains PEO and a liquid medium for dissolving or dispersing the PEO (hereinafter, such a composition may be referred to as "PEO composition");
a step (S2) of applying, onto the porous support layer 11, the PEO composition that has been filtered; and
a step (S3) of irradiating, with an electron beam, the PEO composition that has been applied onto the porous support layer 11.

The method for producing the gas separation membrane 10 may further include, after the step (S3), a step (S4) of removing the liquid medium from the PEO composition that has been irradiated with the electron beam.

Each of the steps of the method for producing the gas separation membrane 10 will be described below in detail.

(Step (S1))

The step (S1) is a step of preparing a PEO composition to be applied onto the porous support layer 11. The PEO composition may contain, in addition to the PEO and the liquid medium, an additive, such as a surfactant, a filler, and an antioxidant, a polymer which differs from the PEO, and/or a crosslinking agent.

The step (S1) may include a step of mixing the PEO and the liquid medium to prepare the PEO composition. In the step of preparing the PEO composition, for example, the PEO and the liquid medium, and, if necessary, an additive such as a surfactant may be mixed and stirred.

A weight-average molecular weight of the PEO contained in the PEO composition is preferably not less than $10\times10^3$, more preferably not less than $18\times10^3$ and not more than $10{,}000\times10^3$, and further preferably not less than $20\times10^3$ and not more than $8{,}000\times10^3$, may be not less than $100\times10^3$ and not more than $5{,}000\times10^3$, and may be not less than $300\times10^3$ and not more than $4{,}500\times10^3$. If the weight-average molecular weight of the PEO increases, the separation functional layer 15 having a large value on the left side ((Pb/Pa) $\times$ 100) in the expression (I) and having a low melting point is easily obtained, and the separation functional layer 15 having a low degree of crystallinity is easily obtained. If the weight-average molecular weight of the PEO falls within the above-described range, the gas separation membrane 10 having the separation functional layer 15 which satisfies at least one selected from the group consisting of the above-described condition [x] and the above-described condition [y] is easily obtained. The weight-average molecular weight of the PEO can be measured by the method described in Examples which will be described later.

The liquid medium is not particularly limited, provided that the liquid medium is a medium in the form of liquid in which the PEO can be dissolved or dispersed. Examples of the liquid medium include: protonic polar solvents such as water and alcohols such as methanol, ethanol, 1-propanol and 2-propanol; nonpolar solvents such as toluene, xylene, and hexane; ketones such as acetone, methyl ethyl ketone, and methyl isobutyl ketone; non-protonic polar solvents such as N-methylpyrrolidone, N,N-dimethylacetamide, and N,N-dimethylformamide; and the like. As the liquid medium, one type of these may be used alone, or two or more types of these may be used in combination within a compatible range. Among these, a liquid medium containing at least one selected from the group consisting of water and alcohols such as methanol, ethanol, 1-propanol, and 2-propanol is preferable, and a liquid medium containing water is more preferable.

The surfactant is not particularly limited, and may be an anionic surfactant, a cationic surfactant, an amphoteric surfactant, or a nonionic surfactant. Examples of the surfactant include known surfactants such as fluorine-based surfactants and silicone-based surfactants. As the surfactant, one type of these surfactants may be used alone, or two or more types of these surfactants may be used in combination. If the PEO composition contains the surfactant, application of the PEO composition onto a porous support layer improves wettability between the PEO composition and a surface to which the PEO composition is applied. Thus, it is possible to reduce the occurrence of, for example, unevenness in thickness of the separation functional layer 15, as compared with a case where the PEO composition does not contain the surfactant.

The filler may be an inorganic filler such as zeolite, silica, or carbon, may be an organic filler such as resin particles, may be an organic-inorganic filler such as a metal organic framework (MOF), or may be two or more of these.

The antioxidant may be a primary antioxidant (radical scavenger), may be a secondary antioxidant (peroxide decomposition agent), or may be a combination of these. Specific examples of the antioxidant include an aromatic amine-based antioxidant, a hindered phenol-based antioxidant, a sulfur-based antioxidant, a phosphorus-based antioxidant, L-ascorbic acid, erythorbic acid, catechin, dibutylhydroxytoluene (BHT), butylated hydroxyanisole, chlorogenic acid, ferulic acid, β-carotene, ubiquinol, sodium erythorbate, propyl gallate, sodium sulfite, potassium sulfite, potassium pyrosulfite,

sulfur dioxide, rosemary extract, and the like.

Examples of the aromatic amine-based antioxidant include phenylnaphthylamine, 4,4'-dimethoxydiphenylamine, 4,4'-bis($\alpha$,$\alpha$-dimethylbenzyl)diphenylamine, 4-isopropoxydiphenylamine, and the like.

Examples of the hindered phenol-based antioxidant include 2,4-dimethyl-6-t-butylphenol, 2,6-di-t-butylphenol, 2,6-di-t-butyl-p-cresol, hydroxymethyl-2,6-di-t-butylphenol, 2,6-di-t-$\alpha$-dimethylamino-p-cresol, 2,5-di-t-butyl-4-ethylphenol, 4,4'-bis(2,6-di-t-butylphenol), 2,2'-methylene-bis-4-methyl-6-t-butylphenol, 2,2'-methylene-bis(4-ethyl-6-t-butylphenol), 4,4'-methylene-bis(6-t-butyl-o-cresol), 4,4'-methylene-bis(2,6-di-t-butylphenol), 2,2'-methylene-bis(4-methyl-6-cyclohexylphenol), 4,4'-butylidene-bis(3-methyl-6-t-butylphenol), 4,4'-thiobis(6-t-butyl-3-methylphenol), bis(3-methyl-4-hydroxy-5-t-butylbenzyl)sulfide, 4,4'-thiobis(6-t-butyl-o-cresol), 2,2'-thiobis(4-methyl-6-t-butylphenol), 2,6-bis(2'-hydroxy-3'-t-butyl-5'-methylbenzyl)-4-methylphenol, 3,5-di-t-butyl-4-hydroxybenzenesulfonic acid diethyl ester, 2,2'-dihydroxy-3,3'-di($\alpha$-methylcyclohexyl)-5,5'-dimethyl-diphenylmethane, $\alpha$-octadecyl-3 (3', 5'-di-t-butyl-4'-hydroxyphenyl)propionate, 6-(hydroxy-3,5-di-t-butylanilino)-2,4-bis-octyl-thio-1,3,5-triazine, hexamethylene glycol-bis[$\beta$-(3,5-di-t-butyl-4-hydroxyphenol)propionate], N,N'-hexamethylene-bis(3,5-di-t-butyl-4-hydroxyhydrocinnamic acid amide), 2,2-thio [diethyl-bis-3(3,5-di-t-butyl-4-hydroxyphenyl)propionate], 3,5-di-t-butyl-4-hydroxybenzenephosphonic acid dioctadecyl ester, tetrakis[methylene-3 (3,5-di-t-butyl-4-hydroxyphenyl)propionate]methane, 1,3,5-trimethyl-2,4,6-tris(3,5-di-t-butyl-4-hydroxybenzyl)benzene, 1,1,3-tris(2-methyl-4-hydroxy-5-di-t-butylphenyl)butane, tris(3,5-di-t-butyl-4-hydroxyphenyl)isocyanurate, tris[$\beta$-(3,5-di-t-butyl-4-hydroxyphenyl)propionyl-oxyethyl]isocyanurate, and the like.

Examples of the sulfur-based antioxidant include sulfur-containing compounds such as a thioether-based antioxidant, a dithioate-based antioxidant, a mercaptobenzimidazole-based antioxidant, a thiocarbanilide-based antioxidant, and a thiodipropionate ester-based antioxidant. Among these, the thioether-based antioxidant is a compound having at least one thioether bond in a molecular structure, and includes, for example, long-chain dialkylthiodipropionate (such as dilauryl-3,3'-thiodipropionate and distearyl-3,3'-thiodipropionate), tetrakis[methylene-3-(long-chain alkylthio) propionate]alkane (such as, for example, tetrakis[methylene-3-(dodecylthio)propionate]methane), and the like. Examples of a long-chain alkyl group in the thioether-based antioxidant include a linear or branched alkyl group having 8 to 20 carbon atoms. One type of these thioether-based antioxidants can be used alone, or two or more types of these thioether-based antioxidants can be used in combination.

Examples of the phosphorus-based antioxidant include a phosphite-based compound, a phosphate-based compound, and the like. Among these, examples of the phosphite-based compound include tetrakis[2-t-butyl-4-thio(2'-methyl-4'-hydroxy-5'-t-butylphenyl)-5-methylphenyl]-1,6-hexamethylene-bis(N-hydroxyethyl-N-methylsemicarbazide)-diphosphite, tetrakis[2-t-butyl-4-thio(2'-methyl-4'-hydroxy-5'-t-butylphenyl)-5-methylphenyl]-1,10-decamethylene-dicarboxylic acid-di-hydroxyethylcarbonylhydrazide-diphosphite, tetrakis[2-t-butyl-4-thio(2'-methyl-4'-hydroxy-5'-t-butylphenyl)-5-methylphenyl]-1,10-decamethylene-dicarboxylic acid-di-salicyloylhydrazide-diphosphite, tetrakis[2-t-butyl-4-thio(2'-methyl-4'-hydroxy-5'-t-butylphenyl)-5-methylphenyl]-di(hydroxyethylcarbonyl)hydrazide-diphosphite, tetrakis[2-t-butyl-4-thio(2'-methyl-4'-hydroxy-5'-t-butylphenyl)-5-methylphenyl]-N,N'-bis(hydroxyethyl)oxamide-diphosphite, and the like.

Examples of the polymer which differs from the PEO include polyacrylic acid, polypropylene oxide, polyvinyl alcohol, polyethyleneimine, polyvinylamine, polyallylamine, polyvinylpyrrolidone, and the like. Examples of the crosslinking agent include acrylic ester and the like.

The PEO composition may not contain a crosslinking agent for crosslinking the PEO. The state of not containing a crosslinking agent means that a contained amount of the crosslinking agent is less than 0.1% by mass with respect to a total mass of the PEO in the PEO composition. If the PEO composition contains the crosslinking agent, a contained amount of the crosslinking agent may be not less than 0.1% by mass and not more than 50% by mass, may be not less than 1% by mass and not more than 20% by mass, and may be not less than 1% by mass and not more than 10% by mass, with respect to a total mass of the PEO in the PEO composition.

A contained amount of the PEO in the PEO composition may be not less than 0.1% by mass and not more than 70% by mass, may be not less than 1.0% by mass and not more than 60% by mass, and may be not less than 1.5% by mass and not more than 55% by mass.

(Step (S2))

The step (S2) is a step of applying a filtered PEO composition onto the porous support layer 11. The step (S2) may include a step of filtering the PEO composition. Filtering the PEO composition makes it is possible to remove gas bubbles, insoluble substances, and the like contained in the PEO composition while the PEO composition is applied onto the porous support layer 11. With this configuration, it is possible to reduce the occurrence of a defect in a layer of the PEO composition applied onto the porous support layer 11 and in a separation functional layer formed by the layer of the PEO composition, as compared with a case where the PEO composition is not filtered.

If the gas separation membrane 10 has a gutter layer, the step (S2) may have the step of forming the gutter layer on the porous support layer 11. The gutter layer can be formed, for example, by applying, to the porous support layer 11, a

material for forming the gutter layer. If the gutter layer has been formed on the porous support layer 11, the PEO composition is applied to the side of the porous support layer 11 where the gutter layer has been formed.

An application method for applying the PEO composition onto the porous support layer 11 is not particularly limited. Examples of the application method include a spin coating method, a bar coating method, a die coating method, a blade coating method, an air knife coating method, a gravure coating method, a roller coating method, a spray coating method, a dipping method, a comma roller method, a kiss coating method, screen printing, inkjet printing, and the like. An application amount of the PEO composition is preferably in a range of not less than 1 $g/m^2$ and not more than 1,000 $g/m^2$, more preferably in a range of not less than 5 $g/m^2$ and not more than 750 $g/m^2$, further preferably in a range of not less than 10 $g/m^2$ and not more than 500 $g/m^2$, in terms of weight per unit area (solid content per unit area). Adjustment of the weight per unit area can be controlled with a formation rate of an applied coating (e.g., a transferring speed of a porous support layer), a concentration of the PEO composition, a discharge rate of the PEO composition, and the like.

If the gas separation membrane 10 has the reinforcing layer 13, the step (S2) is preferably a step of preparing a laminated support which includes the reinforcing layer 13 and the porous support layer 11 and applying the PEO composition to the porous support layer 11 side of this laminated support.

(Step (S3))

The step (S3) is a step of irradiating, with an electron beam, the PEO composition applied onto the porous support layer 11. The step (S3) enables PEO in the PEO composition to be subjected to electron beam crosslinking on the porous support layer 11 to form crosslinked PEO. The electron beam irradiation is preferably carried out in a state in which, after the PEO composition has been applied onto the porous support layer 11, a contained amount of the liquid medium in a layer of the applied PEO composition is not less than 40% by mass. The contained amount of the liquid medium is more preferably not less than 50% by mass, and further preferably not less than 70% by mass, may be not less than 80% by mass, and may be not less than 90% by mass. By carrying out electron beam irradiation under the condition that the liquid medium is sufficiently present in the layer of the PEO composition applied onto the porous support layer 11, the gas separation membrane 10 having the separation functional layer 15 which satisfies at least one selected from the group consisting of the above-described condition [x] and the above-described condition [y] is easily obtained. In the step (S3), the electron beam irradiation may be carried out before the liquid medium is removed from the layer of the PEO composition, or the electron beam irradiation may be carried out after a portion of the liquid medium has been removed from the layer of the PEO composition. If a portion of the liquid medium is removed from the layer of the PEO composition, it is preferable that the liquid medium be removed such that the contained amount of the liquid medium in the layer of the PEO composition applied onto the porous support layer 11 falls within the above-described range. Examples of a method for removing a portion of the liquid medium from the layer of the PEO composition include air drying, draft drying, heat drying, and the like.

An exposure dose of the electron beam is preferably not less than 10 kGy, more preferably not less than 15 kGy and not more than 400 kGy, and further preferably not less than 20 kGy and not more than 400 kGy, may be not less than 30 kGy and not more than 350 kGy, and may be not less than 40 kGy and not more than 300 kGy. If the exposure dose of the electron beam is high, the separation functional layer 15 having a large value on the left side ($(Pb/Pa) \times 100$) in the expression (I) and having a low melting point is easily obtained, and the separation functional layer 15 having a low degree of crystallinity is easily obtained. If the exposure dose of the electron beam falls within the above-described range, the gas separation membrane 10 having the separation functional layer 15 which satisfies at least one selected from the group consisting of the above-described condition [x] and the above-described condition [y] is easily obtained. If an irradiation amount of the electron beam is too large, the porous support layer is easily damaged. Thus, the exposure dose of the electron beam preferably falls within the above-described range. The exposure dose of the electron beam can be adjusted by adjusting the number of times of electron beam irradiation, an electron beam irradiation time, and the like.

In the step (S3), an electron beam may be emitted from the porous support layer 11 side to the PEO composition applied onto the porous support layer 11. Alternatively, an electron beam may be emitted from the PEO composition side. Alternatively, electron beams may be emitted from both of the sides.

In the step (S3), an electron beam may be emitted under an air atmosphere, or an electron beam may be emitted under an atmosphere of an inert gas such as a nitrogen gas, an argon gas, or a helium gas.

Between the step (S2) and the step (S3), the following steps (S2a), (S2b), and (S2c) may be carried out.

Step (S2a): a step of drying the PEO composition applied onto the porous support layer to form a film that is composed of the PEO composition.

Step (S2b): a step of irradiating the film formed in the step (S2a) with an electron beam to pre-crosslink the film so that the shape of the film is retained.

Step (S2c): a step of applying an aqueous liquid onto the film obtained in the step (S2b) to hydrate the film.

If the step (S2a), the step (S2b), and the step (S2c) are carried out, the PEO composition that is irradiated with an electron beam in the step (S3) is a film that has been hydrated in the step (S2c).

The drying in the step (S2a) means that the film composed of the PEO composition is formed by removing the liquid medium from the PEO composition applied onto the porous support layer. Examples of a method for the drying include air drying, draft drying, heat drying, and the like. Conditions for the drying, such as a drying temperature and a drying time, may be adjusted as appropriate so as to form the film composed of the PEO composition. In addition, the film formed in the step (S2a) contains uncrosslinked PEO (non-crosslinked PEO).

The pre-crosslinking of the film in the step (S2b) means that non-crosslinked PEO constituting an amorphous portion of the film is crosslinked by irradiation with an electron beam. Here, a crosslinked structure formed by the pre-crosslinking functions as a fixed phase, so that the shape of the film is retained. The irradiation condition of the electron beam, the exposure dose of the electron beam, and the like may be the same as the irradiation condition of the electron beam, the exposure dose of the electron beam, and the like in the step (S3).

In the step (S2c), a crystal portion in the film having the shape retained in the step (S2b) is dissolved and amorphized by an aqueous liquid to be coated. Then, the amorphized portion is crosslinked by the electron beam irradiation in the subsequent step (S3). As a result, the separation functional layer 15 of the gas separation membrane 10 has a larger number of crosslinking points and thus has a higher crosslinking density and a lower degree of crystallinity.

Thus, the gas separation membrane 10 produced by the production method including the step (S2a), the step (S2b), and the step (S2c) has a higher crosslinking density and thus has more excellent shape retainability. In addition, the gas separation membrane 10 has a lower degree of crystallinity and has more excellent $CO_2$ permeability under a low temperature condition.

The aqueous liquid used in the step (S2c) is not particularly limited as long as the aqueous liquid contains water, and may optionally contain an additive. As the additive, for example, the additive exemplified in the step (S1) can be used.

(Step (S4))

The step (S4) is a step carried out after the step (S3) and is a step of removing the liquid medium from the PEO composition that is on the porous support layer 11 and that has been irradiated with the electron beam. In the step (S4), the liquid medium can be removed by air drying, draft drying, heat drying, and the like. In the step (S4), it is preferable that the separation functional layer 15 be formed on the porous support layer 11.

If the gas separation membrane 10 has the protective layer 12, in the step (S3), the electron beam irradiation may be carried out after the protective layer 12 has been formed on the layer of the PEO composition formed on the porous support layer 11. Alternatively, a configuration may be employed in which the electron beam irradiation is carried out in the step (S3), and the protective layer 12 is formed on the layer of the PEO composition before the step (S4) is carried out. Alternatively, a configuration may be employed in which the protective layer 12 is formed on the separation functional layer 15 which has been formed by carrying out the step (S4).

(Gas separation device)

The gas separation device can include the gas separation membrane 10 described above. The gas separation membrane 10 can be incorporated into a gas separation device as a gas separation membrane element in a known form such as a spiral type, a flat membrane type, a pleated type, or a plate- and-frame type. The gas separation membrane element may have a laminated body in which a feed side gas flow path member through which a raw material gas (mixed gas) and a non-permeation gas flow and a permeation side gas flow path member through which a permeation gas flows are formed on the gas separation membrane 10. The gas separation membrane element can have a sealing part for preventing mixing of the raw material gas and the non-permeation gas with the permeation gas.

The gas separation device can include, in addition to the gas separation membrane 10 (the gas separation membrane element having the gas separation membrane 10), at least one member selected from the group consisting of the members below. Here, the members are a feeding section for feeding a mixed gas to the gas separation membrane 10, a permeation gas discharging section for discharging a permeation gas that has permeated through the gas separation membrane 10, and a non-permeation gas discharging section for discharging a non-permeation gas that has not permeated through the gas separation membrane 10.

The gas separation device includes the gas separation membrane 10 and thus can suppress leaks and have excellent $CO_2$ permeability under a low temperature condition. When an operation temperature of the gas separation device is not lower than 20°C and not higher than 60°C, the gas separation device in accordance with the present embodiment can be suitably used. For example, the gas separation device in accordance with the present embodiment can be suitably used to carry out gas separation of a combustion exhaust gas that is generated in an incinerator. The operation temperature of the gas separation device may be not lower than 20°C and not higher than 60°C and is preferably not lower than 30°C and not higher than 55°C, and more preferably not lower than 35°C and not higher than 50°C.

(Analysis method for analyzing crosslinked structure of polymer (p))

An analysis method for analyzing the crosslinked structure of the polymer (p) includes:

a step of measuring, by a gas chromatography mass spectrometry method, a solution obtained by chemically decomposing the polymer (p) with use of acetic anhydride and p-toluenesulfonic acid monohydrate; and
a step of detecting a peak of the compound (a) and a peak of the compound (b) in a chromatogram obtained by the gas chromatography mass spectrometry method.

The analysis method may further include a step of analyzing the crosslinked structure of the polymer on the basis of a ratio between the peak area Pa of the compound (a) and the peak area Pb of the compound (b) in the chromatogram obtained in the above-described measurement step. In the analysis method, the polymer (p) chemically decomposed in the above-described measurement step may be a polymer contained in the separation functional layer of the gas separation membrane.

As described above, the peaks of the compounds (a) and (b) in the solution obtained by chemically decomposing the polymer (p) appear in the chromatogram obtained by the gas chromatography mass spectrometry method. By comparing these peaks, the proportion (crosslinking density) of the crosslinked structure in the polymer (p) can be estimated. A method for comparing the peaks of the compounds (a) and (b) includes, for example, a method of making a comparison between the peak areas Pb and Pb of the compounds (a) and (b) in the chromatogram. It is possible to determine a content proportion between the compound (a) and the compound (b) on the basis of the peak areas Pa and Pb, and, by calculating a ratio (Pb/Pa) between the compound (a) and the compound (b), it is possible to analyze the proportion (crosslinking density) of the crosslinked structure in the polymer (p). Thus, it is possible to analyze, for example, the proportion (crosslinking density) of the crosslinked structure of the polymer (p) contained in the separation functional layer 15. Examples

The following description will further specifically discuss embodiments of the present invention with reference to Examples and Comparative Examples. Note, however, that the present invention is not limited to these examples.

[Preparation of PEO composition]

(Preparation of PEO composition (1))

4.0 g of polyethylene oxide ("ALKOX E-160" (manufactured by Meisei Chemical Works, Ltd.), weight-average molecular weight: $4000 \times 10^3$), 196.0 g of water, and 1.1 g of an aqueous solution containing 10% by mass of a surfactant (SURFLON S-242, manufactured by AGC Seimi Chemical Co., Ltd.) were mixed and stirred to obtain a PEO composition (1).

(Preparation of PEO composition (2))

7.4 g of polyethylene oxide ("Polyethylene Glycol" (manufactured by FUJIFILM Wako Pure Chemical Corporation), weight-average molecular weight: $500 \times 10^3$), 82.2 g of water, and 0.5 g of an aqueous solution containing 10% by mass of a surfactant (SURFLON S-242, manufactured by AGC Seimi Chemical Co., Ltd.) were mixed and stirred to obtain a PEO composition (2).

(Preparation of PEO composition (3))

45.0 g of polyethylene oxide ("Polyethylene Glycol" (manufactured by FUJIFILM Wako Pure Chemical Corporation), weight-average molecular weight: $20 \times 10^3$), 44.5 g of water, and 0.5 g of an aqueous solution containing 10% by mass of a surfactant (SURFLON S-242, manufactured by AGC Seimi Chemical Co., Ltd.) were mixed and stirred to obtain a PEO composition (3).

[Examples 1 to 6 and Comparative Examples 1 to 5]

As a porous support layer, a polypropylene porous membrane (Celgard (registered trademark) 2500, manufactured by Polypore) was prepared. With use of corona surface modification test equipment (TEC-4AX, manufactured by KASUGA DENKI, INC., treatment electrode width: 21 cm), one surface of the porous support layer was subjected to a corona treatment under conditions in which discharge power was 75 W and a treatment speed was 1 m/min.

Each of the PEO compositions shown in Table 1 was filtered with a filter having a pore diameter of 2 μm. To the corona treatment surface of the porous support layer, each of the filtered PEO compositions was applied using a film

applicator in which a coating thickness was set to 100 μm. With use of an electron beam irradiator "EC250" (manufactured by IWASAKI ELECTRIC CO., LTD.), each of the PEO compositions on the porous support layer was irradiated with an electron beam under the condition and exposure dose shown in Table 1 to obtain a laminated body having the porous support layer and the layer of the PEO composition. The irradiation conditions (1) to (3) in Table 1 indicate the following conditions.

<Irradiation condition (1)>

Exposure dose: 20 kGy, electric current: 5.6 mA, voltage: 225 kV, speed: 21 m/min, number of times of irradiation: once

<Irradiation condition (2)>

Exposure dose: 50 kGy, electric current: 5.6 mA, voltage: 225 kV, speed: 8 m/min, number of times of irradiation: once

<Irradiation condition (3)>

Exposure dose: 100 kGy, electric current: 5.6 mA, voltage: 225 kV, speed: 8 m/min, number of times of irradiation: twice

The laminated body obtained above was left to stand still and air-dried at a temperature of 25°C (room temperature) to form a separation functional layer having a thickness shown in Table 1. In this way, a gas separation membrane was obtained.

[Example 7]

The filtered PEO composition (1) was applied to the corona treatment surface of the porous support layer by a method similar to that in Example 1. After that, the porous support layer to which the PEO composition (1) had been applied was air-dried at a temperature of 25°C (room temperature) to obtain a laminated body A having the porous support layer and the layer of the PEO composition.

With use of an electron beam irradiator "EC250" (manufactured by IWASAKI ELECTRIC CO., LTD.), the laminated body A was subjected to first electron beam irradiation under the irradiation conditions and exposure dose shown in <Irradiation condition (2)> above.

Onto the layer of the PEO composition of the laminated body A which had been subjected to the first electron beam irradiation, an aqueous solution containing 1% by mass of a surfactant (SURFLON S-242, manufactured by AGC Seimi Chemical Co., Ltd.) was applied using a film applicator in which a coating thickness was set to 200 μm.

Subsequently, with use of an electron beam irradiator "EC250" (manufactured by IWASAKI ELECTRIC CO., LTD.), the laminated body A to which the aqueous solution containing 1% by mass of the surfactant had been applied was subjected to second electron beam irradiation under the irradiation conditions and exposure dose shown in <Irradiation condition (2)> above. As a result, a laminated body B having the porous support layer and the layer of the PEO composition was obtained.

The laminated body B was left to stand still and air-dried at a temperature of 25°C (room temperature) to form a separation functional layer having a thickness of 1.2 μm. In this way, a gas separation membrane was obtained.

[Example 8]

Except that the second electron beam irradiation was carried out under the irradiation conditions and exposure dose shown in <Irradiation condition (3)> above, the same method as in Example 7 was carried out to obtain a gas separation membrane. The thickness of the separation functional layer of the gas separation membrane was 1.2 μm.

For the separation functional layers of the gas separation membrane obtained in Examples and Comparative Examples, gas chromatography mass spectrometry, melting point measurement, and crystallization degree measurement were carried out in the procedures shown below. In addition, in the procedures shown below, a leak test and a permeation property evaluation on the gas separation membranes obtained in Examples and Comparative Examples were carried out. The results are shown in Table 2.

[Measurement of weight-average molecular weight]

The weight-average molecular weight of polyethylene oxide (PEO) used in the preparation of the PEO

composition was measured under the conditions shown below using GPC measurement (gel permeation chromatography).

<GPC measurement condition>

Device: Shimadzu LC-20A (manufactured by Shimadzu Corporation)
Column: two TSKgel α-M (mixed column, exclusion limit molecular weight: 10,000,000)
Guard column: TSKgel guardcolumn α
Mobile phase: water/acetonitrile = 5/5, 50 mM lithium bromide added

(Acetonitrile used was of HPLC grade, and lithium bromide used was a JIS first-grade reagent (anhydrate))

Flow rate: 1 mL/min
Measurement time: 40 minutes
Column oven: 40°C
Detection: differential refractometer
Cleaning solvent: water/acetonitrile = 5/5
Dissolving solvent: water/acetonitrile = 5/5, 50 mM lithium bromide added
Sample concentration: 1 mg/mL
Introduced amount: 10 μL
Molecular weight calibration: PEG/PEO standards manufactured by Agilent (molecular weight of 10 in a molecular weight range of 1,000 to 1,500,000)

[Measurement of thickness]

The thicknesses of the separation functional layers obtained in Comparative Example 1 and Examples 1 to 3 were measured under the conditions shown below with use of a white-light interferometric microscope.

Device: scanning white-light interferometric microscope VS1330 (manufactured by Hitachi High-Tech Corporation)
Measurement mode: Phase
Wavelength filter: 520 nm
Measurement range: ±3 μm

The thicknesses of the separation functional layers obtained in Comparative Examples 2 to 5 and Examples 4 to 6 were measured with use of a thickness gauge (high-precision type, manufactured by Mitutoyo Corporation).

The thicknesses of the separation functional layers obtained in Examples 7 and 8 were measured with use of a thickness gauge (high-precision type, manufactured by Mitutoyo Corporation).

[Gas chromatography mass spectrometry of separation functional layer]

Approximately 4 mg of the separation functional layer of each of the gas separation membranes prepared in Examples and Comparative Examples was weighed and collected in the test tube. To the test tube, 4 mL of acetic anhydride and p-toluenesulfonic acid monohydrate were added, and a stirrer chip was further introduced. The resulting mixture was heated and stirred for 12 hours under conditions of a nitrogen atmosphere and a temperature of 130°C to obtain a solution. 0.5 mL of the obtained solution was collected, 5 mL of methyl tert-butyl ether (MTBE) and 5 mL of saturated saline solution (Brine) were added thereto, and the resulting mixture was stirred and left to stand still for liquid separation. An upper layer of the solution after the liquid separation was collected, and gas chromatography mass spectrometry was carried out with respect to the upper layer under the conditions shown below to obtain a chromatograph. From the obtained chromatograph, the peak area Pa of the compound (a) and the peak area Pb of the compound (b) were calculated, and a value on the left side ((Pb/Pa) × 100) of the expression (I) was determined.

<Gas chromatography mass spectrometry conditions>

Device: gas chromatograph Shimadzu GC 2010 (manufactured by Shimadzu Corporation)
Column: DB-5MS (0.25 μm, 0.25 mmφ × 30 m)
Column temperature: maintained at 50°C for 3 minutes, raised at 10°C/min to 320°C, and maintained at 320°C for 5 minutes.
Vaporization chamber temperature: 280°C
Column flow rate: He 1.0 mL/min (Constant Flow)
Septum purge gas: He 1.4 mL/min
Injection method (split ratio): split injection (20:1)
Detector: MS (GCMS-QP 2010), SIM (m/z = 43)
Ion source temperature/interface temperature: 200°C/200°C

[Measurement of melting point of separation functional layer]

For the separation functional layer of each of the gas separation membranes prepared in Examples and Comparative Examples, differential scanning calorimetry (DSC) was performed under the conditions shown below, and a peak top temperature in the differential scanning calorimetry was determined as the melting point of the separation functional layer.

<Differential scanning calorimetry conditions>

Device: Discovery DSC 250 (Manufactured by TA Instruments)
Temperature: maintained at -80°C for 5 minutes, raised at 5°C/min from -80°C to 180°C, and maintained at 180°C for 5 minutes. Thereafter, lowered at 5°C/min from 180°C to - 80°C and maintained at -80°C for 5 minutes. Furthermore, raised at 5°C/min from -80°C to 180°C and maintained at 180°C for 5 minutes.

[Measurement of degree of crystallinity]

For the separation functional layer of the gas separation membrane prepared in Examples and Comparative Examples, X-ray diffraction measurement (XRD) was performed under the conditions shown below. From the ratio of the peak areas of the obtained XRD pattern, the degree of crystallinity was calculated on the basis of the following expression (II):

$$\text{Degree of crystallinity [\%]} = [Pcr/(Pcr + Pam)] \times 100 \quad \text{(II)}$$

(where Pcr denotes a peak area derived from a crystalline portion of a polymer (polymer (p)) having a polyethylene oxide structure, and Pam denotes a peak area derived from an amorphous portion of the polymer (polymer (p)) having the polyethylene oxide structure).

<X-ray diffraction measurement conditions>

X-ray output: 45 kV, 200 mA
Scan speed/count time: 10°/min
Goniometer: SmartLab
Step width: 0.0100°
Attachment: XY-20 mm
Scan axis: 2θ/θ
Filter: Cu_K-beta
Scan range: 10.0° to 35.0°

CBO selection slit: BB
Incident slit: 1/2°
Detector monochrome meter method: None
Longitudinal limit slit: 10.0 mm
Detector: D/teX
Light-receiving slit 1: 20.000 mm
Scan mode: CONTINUOUS
Light-receiving slit 2: 13.000 mm

[Measurement of water content]

After each of the gas separation membranes prepared in Examples and Comparative Examples was stored for 24 hours under the environment of the temperature of 20°C and the relative humidity of 50% RH, the water content of the separation functional layer included in each of the gas separation membranes was measured by a Karl Fischer method under the conditions shown below. This was regarded as a water content of the separation functional layer at a temperature of 20°C and at a relative humidity of 50% RH.

<Water content measurement conditions>

Titration device: trace moisture measurement device KF Coulometer-831 (manufactured by Metrohm)
Heating vaporization device: moisture vaporizer Thermoprep-832 (manufactured by Metrohm)
Generated liquid: AQUAMICRON AX (manufactured by Mitsubishi Chemical Corporation)
Counter electrode liquid: AQUAMICRON CXU (manufactured by Mitsubishi Chemical Corporation)
Extraction time: 300 seconds
Nitrogen flow rate: 50 mL/min
Heating temperature: 200°C
Sample amount: 1 mg

[Leak test]

The gas separation membrane was fixed to a separation membrane cell, and nitrogen ($N_2$) gas was fed and maintained for 10 minutes so that the pressure of a feed side chamber of the separation membrane cell became 100 kPa. If a flow rate of not less than 1.5 mL/min was not observed at the exit of a permeation side chamber of the separation membrane cell, the result of the leak test was evaluated as absence of a leak. If the flow rate of not less than 1.5 mL/min was observed at the exit of the permeation side chamber of the separation membrane cell, the result of the leak test was evaluated as presence of a leak.

[Evaluation of permeation property]

With use of a gas separation device illustrated in Fig. 3 which included a gas separation membrane cell 61, separation performance of the gas separation membrane obtained in each of Examples and Comparative Examples was evaluated. Specifically, the prepared gas separation membrane was cut into an appropriate size to obtain a gas separation membrane 10 in a flat membrane shape. The gas separation membrane 10 in a flat membrane shape was fixed between a feed side chamber 62 and a permeation side chamber 63 of the gas separation membrane cell 61 made of stainless steel. The temperature of the gas separation membrane cell 61 was kept at 40°C. A raw material gas ($CO_2$: 8.3% by volume, $N_2$: 86.5% by volume, $H_2O$: 5.2% by volume) was fed to the feed side chamber 62 of the gas separation membrane cell 61 at a flow rate of 31.7 NL/h. Here, water was introduced with a metering liquid feed pump 68, evaporated by heating, and adjusted so that $H_2O$ had the above mixed ratio. The pressure of the feed side chamber 62 was adjusted to 120 kPaA (absolute pressure) by a back pressure regulator 65 which was provided on the downstream side of a cold trap 64 midway through a discharging path for a non-permeation gas. In addition, a back pressure regulator 69 and a decompression pump 71 were provided between a cold trap 66 and a gas chromatograph 67, and thus the pressure of the permeation side chamber 63 was adjusted to 10 kPaA.

After the start of operation of the gas separation device, at a point in time when a steady state was reached, water vapor contained in a permeation gas discharged from the permeation side chamber 63 was removed with the cold trap 66. Subsequently, the permeation gas from which water vapor had been removed was analyzed with the gas chromatograph 67 to measure $CO_2$ permeance [mol/(m$^2$·sec·kPa)]. Next, the obtained $CO_2$ permeance was divided by $3.35 \times 10^{-7}$ to be

converted into a gas permeation unit (GPU), and the GPU was multiplied by a film thickness [μm] to calculate a $CO_2$ permeability coefficient [Barrer]. The unit "Barrer" is "$1 \times 10^{-10}$ $cm^3$(STP)·cm/($cm^2$·s·cmHg)".

[Table 1]

| | PEO composition | | Electron beam irradiation | | Separation functional layer |
|---|---|---|---|---|---|
| | Type | Weight-average molecular weight | Condition | Exposure dose [kGy] | Thickness [μm] |
| Comparative Example 1 | (1) | $4000 \times 10^3$ | - | 0 | 1.2 |
| Example 1 | (1) | $4000 \times 10^3$ | (1) | 20 | 1.2 |
| Example 2 | (1) | $4000 \times 10^3$ | (2) | 50 | 1.2 |
| Example 3 | (1) | $4000 \times 10^3$ | (3) | 100 | 1.2 |
| Comparative Example 2 | (2) | $500 \times 10^3$ | - | 0 | 8.0 |
| Example 4 | (2) | $500 \times 10^3$ | (1) | 20 | 8.0 |
| Example 5 | (2) | $500 \times 10^3$ | (2) | 50 | 8.0 |
| Comparative Example 3 | (1) | $20 \times 10^3$ | - | 0 | 53.0 |
| Comparative Example 4 | (1) | $20 \times 10^3$ | (1) | 20 | 53.0 |
| Comparative Example 5 | (1) | $20 \times 10^3$ | (2) | 50 | 53.0 |
| Example 6 | (1) | $20 \times 10^3$ | (3) | 100 | 53.0 |

[Table 2]

| | Separation functional layer | | | | Gas separation membrane | |
|---|---|---|---|---|---|---|
| | (Pb/Pa) × 100 | Melting point | Degree of crystallinity | Water content | Leak | $CO_2$ permeability coefficient |
| | [%] | [°C] | [%] | [%] | | [Barrer] |
| Comparative Example 1 | 0.00 | 67 | 64 | 3.2 | Absent | 71 |
| Example 1 | 0.20 | 56 | 52 | - | Absent | 356 |
| Example 2 | 0.50 | 45 | 38 | 6.2 | Absent | 400 |
| Example 3 | 1.00 | 30 | 6 | - | Absent | 574 |
| Comparative Example 2 | 0.00 | 65 | 76 | 3.5 | Present | - |
| Example 4 | 0.03 | 59 | 68 | - | Absent | 207 |
| Example 5 | 0.09 | 53 | 54 | - | Absent | 408 |
| Comparative Example 3 | 0.00 | 64 | 98 | 3.0 | Present | - |
| Comparative Example 4 | 0.01 | 63 | 92 | - | Present | - |
| Comparative Example 5 | 0.02 | 61 | 91 | 5.2 | Present | - |
| Example 6 | 0.07 | 59 | 89 | - | Absent | 79 |
| Example 7 | 2.51 | 26 | 4 | - | Absent | 192 |
| Example 8 | 3.50 | - | 0 | - | Absent | 143 |

Reference Signs List

10: gas separation membrane

11: porous support layer

12: protective layer

13: reinforcing layer

15: separation functional layer

61: gas separation membrane cell

62: feed side chamber

63: permeation side chamber

64: cold trap

65: back pressure regulator

66: cold trap

67: gas chromatograph

68: metering liquid feed pump

69: back pressure regulator

71: decompression pump

**Claims**

**1.** A gas separation membrane comprising a separation functional layer,

the separation functional layer containing a polymer which has a polyethylene oxide structure and which satisfies at least one selected from the group consisting of a condition [x] and a condition [y],
the condition [x] being such that:

assuming that, in a chromatogram obtained by measuring a solution which is obtained by chemically decomposing the separation functional layer with use of acetic anhydride and p-toluenesulfonic acid monohydrate by a gas chromatography mass spectrometry method, a peak area of a compound represented by the following formula (a) is denoted as Pa, and a peak area of a compound represented by the following formula (b) is denoted as Pb,

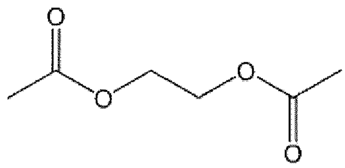

(a)

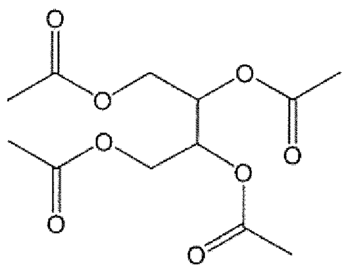

(b)

the separation functional layer satisfies a relationship represented by the following expression (I):

$$(Pb/Pa) \times 100 \geq 0.03 \quad (I),$$

the condition [y] being such that:

the polymer contains crosslinked polyethylene oxide; and
the separation functional layer has a melting point of not higher than 60°C.

**2.** The gas separation membrane of claim 1, wherein a degree of crystallinity of the separation functional layer at a temperature of 25°C is not more than 70%.

**3.** The gas separation membrane of claim 1 or 2, wherein the separation functional layer satisfies the condition [x].

**4.** The gas separation membrane of claim 1 or 2, further comprising a porous support layer, wherein
the porous support layer and the separation functional layer are formed on top of each other.

**5.** The gas separation membrane of claim 1 or 2, wherein a water content of the separation functional layer at a temperature of 20°C and at a relative humidity of 50% RH is not more than 15% by mass.

**6.** The gas separation membrane of claim 1 or 2, wherein said gas separation membrane selectively allows carbon dioxide to permeate therethrough from a mixed gas including the carbon dioxide and nitrogen.

**7.** A gas separation device, comprising a gas separation membrane of claim 1.

**8.** A method for producing a gas separation membrane of claim 1,

the gas separation membrane including a separation functional layer and a porous support layer,
the method comprising:

a step (S1) of preparing a composition that contains polyethylene oxide and a liquid medium for dissolving or dispersing the polyethylene oxide;
a step (S2) of applying, onto the porous support layer, the composition that has been filtered; and
a step (S3) of irradiating, with an electron beam, the composition that has been applied onto the porous support layer.

**9.** The method of claim 8, wherein the polyethylene oxide has a weight-average molecular weight of not less than $10\times10^3$.

**10.** The method of claim 8 or 9, wherein, in the step (S3), the composition is irradiated with the electron beam at an exposure dose of not less than 10 kGy.

**11.** The method of claim 8 or 9, further comprising, after the step (S3), a step (S4) of removing the liquid medium from the composition that has been irradiated with the electron beam.

**12.** An analysis method for analyzing a crosslinked structure of a polymer having a polyethylene oxide structure, the analysis method comprising:

a step of measuring, by a gas chromatography mass spectrometry method, a solution obtained by chemically decomposing the polymer with use of acetic anhydride and p-toluenesulfonic acid monohydrate; and
a step of detecting a peak of a compound represented by the following formula (a) and a peak of a compound represented by the following formula (b) in a chromatogram obtained by the gas chromatography mass spectrometry method.

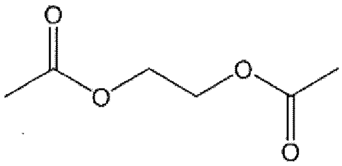

(a)

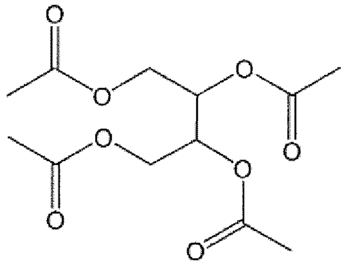

(b)

**13.** The analysis method of claim 12, further comprising a step of analyzing the crosslinked structure of the polymer on a basis of a ratio between a peak area Pa of the compound represented by the formula (a) and a peak area Pb of the compound represented by the formula (b) in the chromatogram obtained in the measurement step.

**14.** The analysis method of claim 12 or 13, wherein the polymer chemically decomposed in the measurement step is a polymer contained in a separation functional layer of a gas separation membrane.

FIG. 1

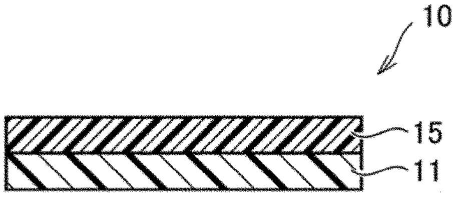


FIG. 2

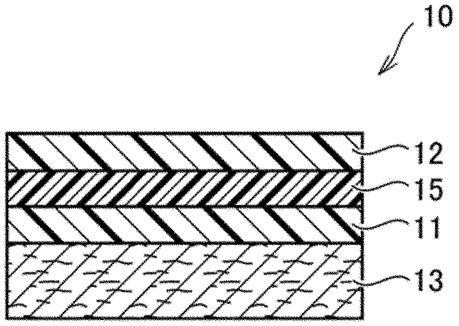


FIG. 3

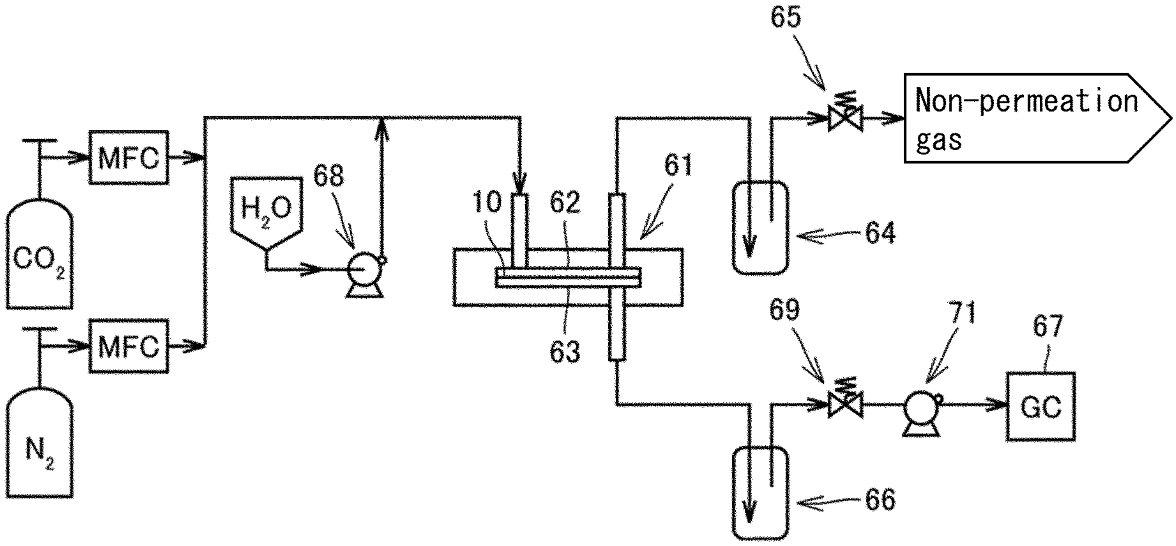

## INTERNATIONAL SEARCH REPORT

International application No. **PCT/JP2023/038436**

**A. CLASSIFICATION OF SUBJECT MATTER**

***B01D 71/52***(2006.01)i; ***B01D 53/22***(2006.01)i; ***B01D 67/00***(2006.01)i; ***B01D 69/02***(2006.01)i; ***B01D 69/10***(2006.01)i; ***B01D 69/12***(2006.01)i; ***G01N 30/72***(2006.01)i; ***G01N 30/88***(2006.01)i
FI: B01D71/52; B01D53/22; B01D67/00 500; B01D69/02; B01D69/10; B01D69/12; G01N30/72 A; G01N30/88 C

According to International Patent Classification (IPC) or to both national classification and IPC

**B. FIELDS SEARCHED**

Minimum documentation searched (classification system followed by classification symbols)

B01D53/22, 61/00-71/82, C02F1/44, G01N30/00-96, B01J20/281-292, C08J5/00-22, C08K3/00-13/08, C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 7-275672 A (AGENCY OF IND SCIENCE & TECHNOL) 24 October 1995 (1995-10-24) paragraphs [0008]-[0025] | 1-11 |
| Y | | 4, 8-11 |
| A | | 12-14 |
| X | KR 10-2022-0114742 A (INDUSTRY-ACADEMIC COOPERATION FOUNDATION, YONSEI UNIVERSITY) 17 August 2022 (2022-08-17) paragraphs [0050]-[0111], fig. 8 | 1-3, 5-7 |
| Y | | 4, 8-11 |
| A | | 12-14 |
| A | JP 2012-515075 A (SARTORIUS STEDIM BIOTECH GMBH) 05 July 2012 (2012-07-05) paragraphs [0026], [0047] | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2023** | **09 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/038436**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: １－２、４－１４
because they relate to parts of the international application that do not comply with the prescribed requirements to such an extent that no meaningful international search can be carried out, specifically:

<Regarding the subject of the search>

The specification of the present application indicates that: the present invention addresses the problem of providing a "gas separation membrane that suppresses leakage and has excellent carbon dioxide permeability under low-temperature conditions; the wording "suppressing leakage" means that, when the gas separation membrane is used in a leak test, a flow rate of at least 1.5 mL/min is not observed at the exit of the permeation-side chamber of the separation membrane cell (paragraph [0007]); in the leak test, the gas separation membrane is fixed to the separation membrane cell; a nitrogen gas is supplied and maintained for 10 minutes such that the pressure in the supply-side chamber of the separation membrane cell is 100 kPa; and it is evaluated as no leakage that a flow rate of at least 1.5 mL/min is not observed at the exit of the permeation-side chamber of the separation membrane cell (paragraph [0130]).

[1] Regarding claims 1-2 and 4-11
Claim 1 sets forth a "gas separation membrane having a separation functional layer, wherein the separation functional layer contains a polymer having a polyethylene oxide structure and <u>satisfies at least one among the conditions [x] and [y]following</u>."
Therefore, the gas separation membrane in claim 1 does not satisfy the condition [x] ($(Pb/Pa)\times100\geq0.03$), and may include a gas separation membrane that satisfies the condition [y] (the polymer contains a crosslinked polyethylene oxide and the melting point of the separation functional layer is 60 °C or lower).

In examples and the like of the present application, only a gas separation membrane <u>($(Pb/Pa)\times100 = 0.03$ to 3.50)</u> in examples 1-8 satisfying the condition [x] is confirmed to have suppressed leakage (no leakage) and good permeability of carbon dioxide.
In addition, the specification of the present application does not describe data or the like capable of confirming of suppressing leakage (no leakage) and the permeability of carbon dioxide in a gas separation membrane that does not satisfy the condition [x] but satisfies the condition [y].
The specification of the present application describes that a gas separation membrane is formed to suppress leakage and have excellent $CO_2$ permeability under low temperature conditions when the condition [x] is satisfied (paragraph [0045]). Therefore, when the condition [x] is not satisfied, it is unclear whether the gas separation membrane is formed to suppress leakage and have excellent $CO_2$ permeability under low temperature conditions, and it is unclear whether the problem of the invention of the present application can be solved or not.

[2] Regarding claims 12-14
Claim 12 sets forth an "analysis method for analyzing a crosslinked structure of a polymer having a polyethylene oxide structure..., the method including a step for detecting the peak of a compound represented by formula (a) and the peak of a compound represented by formula (b)."
Therefore, the analysis method in claim 12 also includes a method for analyzing the crosslinked structure of a "polymer having a polyethylene oxide structure" other than a "polymer having a polyethylene oxide structure in a separation functional layer of a gas separation membrane" or an analysis method that does not include a "step for calculating the peak area Pa of compound (a) and the peak area Pb of compound (b), and determining the value of ($(Pb/Pa)\times100$), and a step for analyzing the ratio of the crosslinked structure of the polymer (crosslinking density) from the value of ($(Pb/Pa)\times100$)."

Form PCT/ISA/210 (continuation of first sheet) (January 2015)

INTERNATIONAL SEARCH REPORT

International application No.
PCT/JP2023/038436

**Box No. II Observations where certain claims were found unsearchable (Continuation of item 2 of first sheet)**

It is considered that the specification of the present application sets forth an "analysis method for analyzing the ratio (crosslinking density) of the crosslinked structure of a polymer having a polyethylene oxide structure in a separation functional layer of a gas separation membrane, the method comprising: a step for measuring, by gas chromatography mass spectrometry, a solution obtained by chemically decomposing the polymer using acetic anhydride and p-toluenesulfonic acid monohydrate; a step for detecting the peak of a compound represented by formula (a) and the peak of a compound represented by formula (b) in a chromatogram obtained by the gas chromatography mass spectrometry; a step for calculating the peak area Pa of the compound represented by(a) above and the peak area Pb of the compound represented by(b)above and determining the value of ((Pb/Pa)×100); and a step for analyzing the ratio (crosslinking density) of the crosslinking structure of the polymer from the determined value of ((Pb/Pa)×100)" (see paragraphs [0043], [0105], and [0124]).

In addition, it is considered that when a subject to be analyzed is a polymer other than the "polymer having a polyethylene oxide structure in the separation functional layer of the gas separation membrane," the present invention cannot solve the problem of "providing a gas separation membrane that suppresses leakage and has excellent carbon dioxide permeability under low temperature conditions."

In addition, when a value other than the value of (Pb/Pa)×100 is used, it is unclear whether the ratio (crosslinking density) of crosslinked structures or crosslinked structures can be analyzed, and it is unclear whether the problem of the invention of the present application can be solved.

Because it is the same as described in [1]-[2] above, it cannot be extended or generalized that the problem of the invention of the present application can be solved by the gas separation membrane of claims 1-2 and 4-11, which can include a gas separation membrane other than the "gas separation membrane satisfying the condition [x]," or the analysis method of claims 12-14, which can include an analysis method other than the "analysis method for analyzing the ratio (crosslinking density) of the crosslinking structure of the polymer having a polyethylene oxide structure in the separation functional layer of the gas separation membrane from the value of ((Pb/Pa)×100).

Therefore, the invention in claims 1-2 and 4-14 is not disclosed in the specification of the present application.

Therefore, the search is carried out within the scope of the disclosure supported by the specification of the present application, that is, with regard to claim 1, the search is carried out on a "gas separation membrane having a separation functional layer, wherein the separation functional layer includes a polymer having a polyethylene oxide structure, and satisfies the following condition [x]. <Condition [x]> A solution obtained by chemically decomposing the separation functional layer by using acetic anhydride and p-toluenesulfonic acid monohydrate is measured by the gas chromatography mass spectrometry, and in the obtained chromatogram, when the peak area of the compound represented by formula (a) is indicated as Pa and the peak area of the compound represented by formula (b) is indicated as Pb, the relationship of the following expression (I) is satisfied: $(Pb/Pa)\times100\geq0.03$ (I), and with regard to claim 12, the search is carried out on an "analysis method for analyzing the ratio (crosslinking density) of the crosslinked structure of a polymer having a polyethylene oxide structure in a separation functional layer of a gas separation membrane, the method comprising: a step for measuring, by a gas chromatography mass spectrometry, a solution obtained by chemically decomposing the polymer using acetic anhydride and p-toluenesulfonic acid monohydrate; a step for detecting the peak of a compound represented by formula (a) and the peak of a compound represented by formula (b) in a chromatogram obtained by the gas chromatography mass spectrometry; a step for calculating the peak area Pa of the compound represented by (a) above and the peak area Pb of the compound represented by (b) above and determining the value of ((Pb/Pa)×100); and a step for analyzing the ratio (crosslinking density) of the crosslinking structure of the polymer from the determined value of ((Pb/Pa)×100)."

3. ☐ Claims Nos.:
because they are dependent claims and are not drafted in accordance with the second and third sentences of Rule 6.4(a).

**INTERNATIONAL SEARCH REPORT**

International application No.
**PCT/JP2023/038436**

**Box No. III Observations where unity of invention is lacking (Continuation of item 3 of first sheet)**

This International Searching Authority found multiple inventions in this international application, as follows:

(1) The invention in claim 1 lacks novelty in light of each of documents 1-2. Therefore, there are no same or corresponding special technical features between the invention in claim 1 and the invention in claims 12-14.
(2) Even if the invention in claim 1 is novel, the common technical feature (polymer having a polyethylene oxide structure) of the invention in claim 1 and the invention in claims 12-14 does not make a contribution over the prior art in light of the disclosures of documents 1-3, and thus cannot be said to be a special technical feature. In addition, there are no other same or corresponding special technical features between these inventions.

Therefore, it is considered that there are the invention in claims 1-11, classified as invention 1, and the invention in claims 12-14 classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2023/038436**

| Patent document cited in search report | Publication date (day/month/year) | Patent family member(s) | Publication date (day/month/year) |
| --- | --- | --- | --- |
| JP 7-275672 A | 24 October 1995 | (Family: none) | |
| KR 10-2022-0114742 A | 17 August 2022 | (Family: none) | |
| JP 2012-515075 A | 05 July 2012 | US 2011/0244215 A1<br>paragraphs [0027], [0055]-[0056]<br>US 2015/0157986 A1<br>WO 2010/081511 A1<br>EP 2705897 A1<br>EP 2705898 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7275672 A